# EUROPÄISCHE PATENTSCHRIFT

(11) **EP 3 634 796 B1**
(45) Veröffentlichungstag und Bekanntmachung des Hinweises auf die Patenterteilung: **23.06.2021**
(21) Anmeldenummer: 18729040.8
(22) Anmeldetag: 22.05.2018
(51) Int. Cl.: B60J 10/79, B60J 10/88

(54) **DICHTUNGSANORDNUNG**
SEAL ASSEMBLY
SYSTÈME D'ÉTANCHÉITÉ

(30) Priorität: 09.06.2017 DE 102017112720
(43) Veröffentlichungstag der Anmeldung: 15.04.2020
(73) Patentinhaber: CQLT SaarGummi Technologies S.à.r.l., 5544 Remich (LU)
(72) Erfinder: ROUX, Sebastien, 76520 St-Aubin-Celloville (FR); SANS, Philippe, 28600 Luisant (FR)
(74) Vertreter: Patentanwälte Bernhardt / Wolff Partnerschaft mbB
(86) Internationale Anmeldenummer: PCT/EP2018/000269
(87) Internationale Veröffentlichungsnummer: WO 2018/224178

(56) Entgegenhaltungen:
- EP-A1- 0 308 377
- EP-A1- 3 118 040
- EP-A2- 2 008 851
- JP-A- 2011 230 632

## Beschreibung

Die Erfindung betrifft eine Dichtungsanordnung mit einem Dichtungselement, das wenigstens einen Dichtungsabschnitt zur Abdichtung einer vertikal bewegbaren Fensterscheibe einer Fahrzeugtür gegen einen vertikalen Fensterrahmenschenkel aufweist.

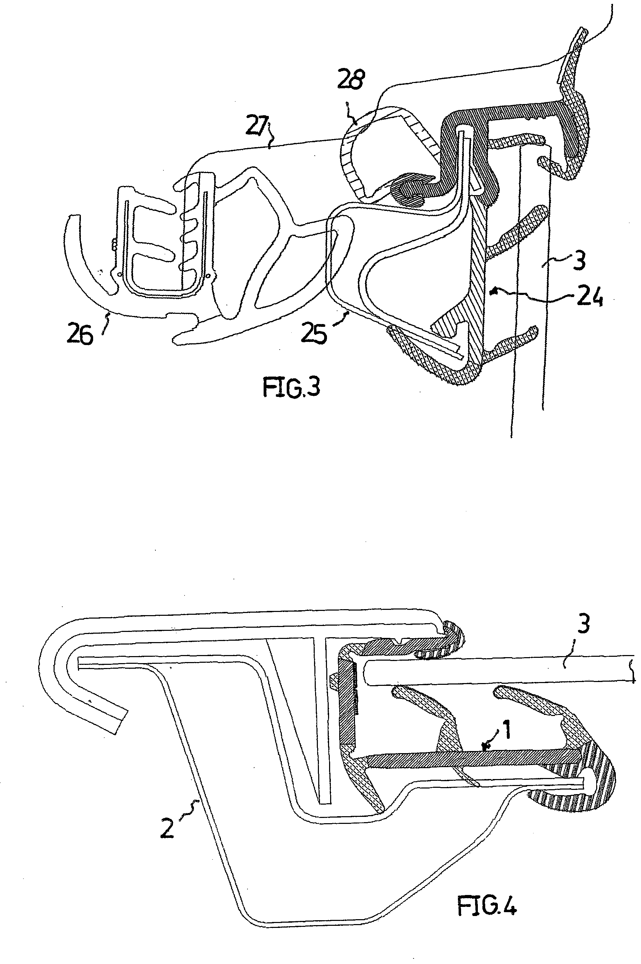

Eine herkömmliche solche Dichtungsanordnung ist der beiliegenden Figur 4 in einem Horizontalschnitt zu entnehmen. Die Dichtungsanordnung umfasst ein Dichtungselement (1), das an einem vertikalen Fensterrahmenschenkel (2) der Fahrzeugtür angebracht ist. Eine vertikal (senkrecht zur Papierebene) bewegbare Fensterscheibe (3) greift mit einer vertikalen Randseite in einen U-förmigen Abschnitt des Dichtungselements (1) ein, wobei der U-förmige Abschnitt des Dichtungselements (1) seinerseits in eine U-förmige Vertiefung in dem Fensterrahmenschenkel (2) eingesetzt ist.

Aus EP0308377A1 ist eine Dichtungsanordnung bekannt, welche einen Dichtungsabschnitt zur Abdichtung einer vertikal bewegbaren Fensterscheibe einer Fahrzeugtür gegen einen vertikalen Fensterrahmenschenkel der Fahrzeugtür sowie ferner einen Dichtungsabschnitt zur Abdichtung eines Spalts aufweist, wobei der Spalt zwischen einem an die Fahrzeugtür grenzenden Karosseriepfosten und einer vertikalen, dem Karosseriepfosten zugewandten Randseite der Fensterscheibe gebildet ist. Aus EP2008851A2, EP3118040A1 und JP2011230632A sind zudem Dichtungsanordnungen für rahmenlose Fahrzeugtüren bekannt.

Durch die Erfindung wird eine neue Dichtung der eingangs genannten Art geschaffen, die dadurch gekennzeichnet ist, dass der den Spalt abdichtende Dichtungsabschnitt schlauchförmig ausgebildet ist und sowohl gegen den Karosseriepfosten als auch die Fensterscheibe anliegt. Die Schlauchgeometrie erlaubt eine sichere Anlage des Dichtungsabschnitts sowohl gegen den Karosseriepfosten als auch die Fensterscheibe und somit eine reproduzierbare Absperrung des Spalts.

Gemäß dieser Erfindungslösung kann der vertikale Fensterrahmenschenkel der Fahrzeugtür in Bezug auf die Fensterscheibe vollständig nach innen versetzt angeordnet sein und sich unmittelbar an die Fensterscheibe, nur getrennt durch den Spalt, ein Karosseriepfosten, insbesondere eine B-Säule, anschließen.

Besonders bevorzugt ist die Außenfläche der Fensterscheibe bündig mit einer Außenfläche des Karosseriepfostens, was vorteilhaft sowohl für gutes Aussehen als auch hohe Windschlüpfrigkeit der Fahrzeugkarosserie sorgen kann.

Vorzugsweise weicht der schlauchförmige Dichtungsabschnitt in seiner Querschnittsform von einer Kreisform ab und liegt gegen den Karosseriepfosten insbesondere mit einer Schlauchwandecke an. Letzteres sorgt für eine hohe Flächenpressung und damit zuverlässige Abdichtung. Es versteht sich, dass unter der Schlauchwandecke ein Wandverlauf mit vergleichsweise geringem Rundungsradius zu verstehen ist.

In weiterer Ausgestaltung der Erfindung umfasst der schlauchförmige Dichtungsabschnitt zwei unter Bildung der Schlauchwandecke im spitzen Winkel zusammenlaufende Schlauchwandabschnitte. Durch diese Querschnittsgeometrie lässt sich eine besonders hohe Flächenpressung zwischen dem Dichtungsabschnitt und dem Karosseriepfosten erreichen.

Die Schlauchwandabschnitte können sich zueinander im Abstand von einem Kernteil des Dichtungselements erstrecken.

Vorzugsweise besteht der Kernteil aus einem gegenüber dem übrigen Material des Dichtungselements steiferen Material, z.B. aus einem Thermoplast, insbesondere aus Polyprophylen (PP). Für das übrige, für die Bildung von Dichtungsabschnitten verwendete Material kommt ein Elastomer, insbesondere thermoplastisches Elastomer, in Betracht.

In weiterer vorteilhafter Ausgestaltung der Erfindung ist wenigstens einer der beiden Schlauchwandabschnitte zu der Fensterscheibe hin gewölbt und liegt insbesondere mit einem gewölbten Schlauchwandabschnitt gegen die Fensterscheibe an.

Der gegen die Fensterscheibe anliegende Schlauchwandabschnitt weist vorzugsweise die Flexibilität dieses Schlauchwandabschnitts steigernde Schwachstellen auf.

Zweckmäßig umfasst der gegen die Fensterscheibe anliegende Schlauchwandabschnitt eine Gleitschicht, die sich vorzugsweise über die Schlauchwandecke herum erstreckt. Die Erstreckung um die Ecke bewirkt bei häufigem Öffnen und Schließen der Fahrzeugtür eine deutliche Verschleißminderung.

In einer weiteren bevorzugten Ausführungsform der Erfindung ist der Dichtungsabschnitt als Schlauch ausgebildet, der durch eine Rastverbindung zwischen Schlauchwandenden geschlossen ist.

Die Erfindung ist nachfolgend anhand von Ausführungsbeispielen und der beiliegenden, sich auf diese Ausführungsbeispiele beziehenden Zeichnungen weiter erläutert. Es zeigen:
- Fig. 1: erfindungsgemäße Dichtungsanordnungen mit verschiedenen Dichtungs-elementen,
- Fig. 2: eines der in den Anordnungen von Fig. 1 verwendeten Dichtungselemente,
- Fig. 3: eine die Dichtungsanordnungen von Fig. 1 ergänzende Dichtungsanordnung an einem oberen Fensterrahmenschenkel, und
- Fig. 4: eine Dichtungsanordnung nach dem Stand der Technik.

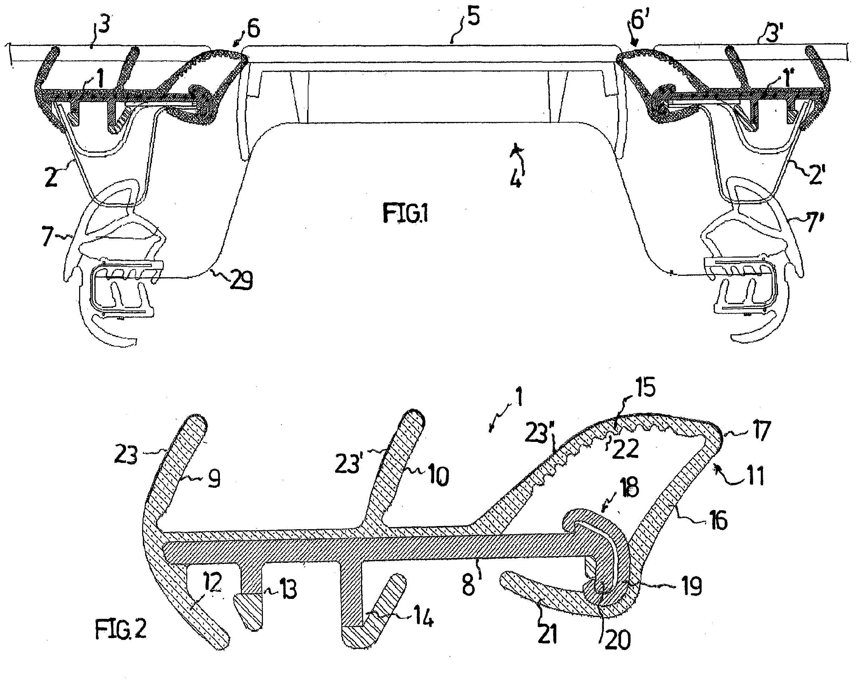

In Fig. 1 in einem Horizontalschnitt gezeigte Dichtungsanordnungen umfassen je ein extrudiertes Dichtungselement 1 bzw. 1', das mit einem Fensterrahmenschenkel 2 bzw. 2' einer Fahrzeugtür verbunden ist. Die Dichtungselemente 1,1' liegen jeweils gegen eine vertikal bewegbare Fensterscheibe 3 bzw. 3' der Fahrzeugtür an.

Ein zwischen den Fahrzeugtüren vorgesehener, häufig als B-Säule bezeichneter Karosseriepfosten 4 weist eine Außenfläche 5 auf, die im geschlossenen Zustand der Fahrzeugtüren (wie gezeigt) bündig mit den Außenflächen der Fensterscheiben 3,3' abschließt. Ein zwischen dem Karosseriepfosten 4 und den diesem zugewandten Randseiten der Fensterscheiben 3,3' gebildeter Spalt 6 bzw. 6' ist durch das Dichtungselement 1 bzw. 1' zusätzlich abgedichtet.

Im geschlossenen Zustand der Fahrzeugtüren ist der Fensterrahmenschenkel 2 bzw. 2' durch ein Dichtungselement 7 bzw. 7' gegen einen Türrahmenteil 29 der Fahrzeugkarosserie abgedichtet.

Das beispielhaft in Fig. 2 gesondert dargestellte Dichtungselement 1 weist einen in seiner Grundform streifenförmigen Kernteil 8 aus einem verhältnismäßig steifen Thermoplastmaterial, wie z.B. Polyprophylen (PP), auf. Mit dem Kernteil 8 verbunden sind zungenförmige Dichtungselemente 9 und 10 zur Anlage gegen die Fensterscheibe 3 sowie ein schlauchförmiges Dichtungselement 11 zur Anlage sowohl gegen die Fensterscheibe 3 als auch gegen den Karosseriepfosten 4. Die Dichtungselemente 9 bis 11 bestehen aus einem gegenüber dem Material des Kernteils 8 weicheren Material, insbesondere einem Elastomermaterial, vorzugsweise thermoplastischem Elastomer. Von dem Kernteil 8 auf der der Fensterscheibe 3 abgewandten Seite abstehende Abschnitte 12 bis 14 bestehen gemäß den unterschiedlichen Schraffuren teilweise aus dem festeren Material des Kernteils 8 und teilweise dem weicheren Material der Dichtungsabschnitte 9,10 und dienen zur Befestigung des Dichtungselements 1 an dem Fensterrahmenschenkel 2.

Der schlauchförmige Dichtungsabschnitt 11 weist aus dem weicheren Material bestehende Schlauchwandabschnitte 15 und 16 auf, die im spitzen Winkel zu einer Schlauchwandecke 17 zusammenlaufen und zu der Fensterscheibe 3 hin gewölbt sind. Die Schlauchwandabschnitte 15,16 bilden gemeinsam mit einem Abschnitt des Kernteils 8 den schlauchförmigen Dichtungsabschnitt 11. Bei 18 ist eine Rastverbindung zwischen einem Ende des Kernteils 8 und dem der Schlauchwandecke 17 abgewandten Ende des Schlauchwandabschnitts 16 gebildet, wobei ein mit dem Schlauchwandabschnitt 16 verbundener Rastbügel 19 aus dem festeren Thermoplastmaterial eine an dem Kernteil 8 vorgesehene Endaufweitung 20 hintergreift. Eine an dem Rastbügel 19 vorbeigeführte Verlängerung 21 des Schlauchwandabschnitts 16 dient der Verbindung des Dichtungselements 1 mit dem Fensterrahmenschenkel 2. Der Schlauchwandabschnitt 15 weist Längsriefen 22 auf, die diesem Abschnitt eine besondere Flexibilität verleihen.

Die Dichtungsabschnitte 9 bis 11 sind jeweils mit einer Gleitschicht 23,23' bzw. 23" versehen, wobei die Gleitschichten 23,23' um das jeweilige freie Ende der lippenförmigen Dichtungsabschnitte 9,10 und die Gleitschicht 23" um die Schlauchwandecke 17 herumgeführt sind.

Die in den Fig. 1 und 2 beschriebenen Dichtungselemente 1,1' sind jeweils über ein durch Spritzgießen angeformtes Eckenteil (nicht gezeigt) mit einem in Fig. 3 dargestellten Dichtungselement 24 verbunden. Das Dichtungselement 24 ist an einem oberen Fensterrahmenschenkel 25 der Fahrzeugtür angebracht.

Bei geschlossener Fahrzeugtür ist der obere Fensterrahmenschenkel 25 durch ein Dichtungselement 26 gegen einen Rahmenteil 27 der Fahrzeugkarosserie abgedichtet. Eine weitere Abdichtung der Fahrzeugtür bzw. des oberen Rahmenschenkels gegen den Rahmenteil 27 bildet ein schlauchförmiger Abschnitt 28 des Dichtungselements 24.

Die Dichtungselemente 1,1' (und auch das Dichtungselement 24) sind durch Mehrfachextrusion gebildet, wobei zunächst der Kernteil 8 extrudiert wird. An den Kernteil 8 werden in einem zweiten Extrusionsschritt sämtliche aus dem weicheren Material bestehenden Abschnitte des Dichtungsstrangs 1 bzw. 1' angeformt. In einem dritten Extrusionsschritt erfolgt die Extrusion des Rastbügels 19 und dessen Verbindung mit dem Schlauchwandabschnitt 16 sowie der Verlängerung 21. Alternativ können der Kernteil 8 und der Rastbügel 19 auch gleichzeitig extrudiert und die Abschnitte aus weicherem Material anschließend durch Extrusion angeformt werden.

Im geschlossenen Zustand der Fahrzeugfenster liegen die zungenförmigen Dichtungsabschnitte 9,10 mit ihren Enden und der schlauchförmige Dichtungsabschnitt 11 mit seinem Schlauchwandabschnitt 15 gegen die Fensterscheibe 3 bzw. 3' abdichtend an.

Im geschlossenen Zustand der Fahrzeugtüren dichtet der Schlauchwandabschnitt 15 den Spalt 6 bzw. 6' zwischen der betreffenden Randseite der Fensterscheibe 3 bzw. 3' und dem Karosseriepfosten 4 ab, indem der schlauchförmige Dichtungsabschnitt 11 mit seiner Schlauchwandecke 17 gegen den Karosseriepfosten 4 anliegt. Die Geometrie des schlauchförmigen Dichtungsabschnitts 11 mit den aufeinander zulaufenden Schlauchwandabschnitten 15,16 sorgt für einen geeigneten Anpressdruck.

## Patentansprüche

1. Dichtungsanordnung mit einem Dichtungselement (1,1'), das wenigstens einen Dichtungsabschnitt (9,10) zur Abdichtung einer vertikal bewegbaren Fensterscheibe (3,3') einer Fahrzeugtür gegen einen vertikalen Fensterrahmenschenkel (2,2') der Fahrzeugtür aufweist,
wobei das Dichtungselement (1,1') ferner einen Dichtungsabschnitt (11) zur Abdichtung eines Spalts (6,6') aufweist, wobei der Spalt (6,6') zwischen einem an die Fahrzeugtür grenzenden Karosseriepfosten (4) und einer vertikalen, dem Karosseriepfosten (4) zugewandten Randseite der Fensterscheibe (3,3') gebildet ist,
**dadurch gekennzeichnet,**
**dass** der Dichtungsabschnitt (11) zur Abdichtung des Spalts (6;6') schlauchförmig ausgebildet ist und sowohl gegen den Karosseriepfosten (4) als auch gegen die Fensterscheibe (3,3') anliegt.

2. Dichtungsanordnung nach Anspruch 1,
**dadurch gekennzeichnet,**
**dass** die Außenfläche der Fensterscheibe (3,3') bündig mit einer Außenfläche (5) des Karosseriepfostens (4) ist.

3. Dichtungsanordnung nach Anspruch 1 oder 2,
**dadurch gekennzeichnet,**
**dass** der schlauchförmige Dichtungsabschnitt (11) in seiner Querschnittsform von einer Kreisform abweicht und gegen den Karosseriepfosten (4) insbesondere mit einer Schlauchwandecke (17) anliegt.

4. Dichtungsanordnung nach einem der Ansprüche 1 bis 3,
**dadurch gekennzeichnet,**
**dass** der schlauchförmige Dichtungsabschnitt (11) zwei unter Bildung der Schlauchwandecke (17) im spitzen Winkel aufeinander zulaufende Schlauchwandabschnitte (15,16) umfasst.

5. Dichtungsanordnung nach Anspruch 4,
**dadurch gekennzeichnet,**
**dass** sich die Schlauchwandabschnitte (15,16) zueinander im Abstand von einem Kernteil (8) des Dichtungselements (1,1') erstrecken.

6. Dichtungsanordnung nach Anspruch 4 oder 5,
**dadurch gekennzeichnet,**
**dass** wenigstens einer der beiden Schlauchwandabschnitte (15,16) zu der Fensterscheibe hin gewölbt ist und insbesondere mit einem gewölbten Schlauchwandabschnitt (15) gegen die Fensterscheibe (3,3') anliegt.

7. Dichtungsanordnung nach Anspruch 6,
**dadurch gekennzeichnet,**
**dass** der gegen die Fensterscheibe (3,3') anliegende Schlauchwandabschnitt (15) die Flexibilität des Schlauchwandabschnitts (15) erhöhende Schwachstellen (22) aufweist.

8. Dichtungsanordnung nach Anspruch 6 oder 7,
**dadurch gekennzeichnet,**
**dass** der gegen die Fensterscheibe (3,3') anliegende Schlauchwandabschnitt (15) eine Gleitschicht (23") aufweist, die sich vorzugsweise über die Schlauchwandecke (17) herum erstreckt.

9. Dichtungsanordnung nach einem der Ansprüche 1 bis 8,
**dadurch gekennzeichnet,**
**dass** der schlauchförmige Dichtungsabschnitt (11) als durch eine Rastverbindung (18) zwischen Schlauchwandenden geschlossener Schlauch ausgebildet ist.

10. Dichtungsanordnung nach einem der Ansprüche 5 bis 9,
**dadurch gekennzeichnet,**
**dass** der Kernteil (8) aus einem Material besteht, das fester als zur Bildung von Dichtungsabschnitten (9-11) des Dichtungselements (1,1') verwendetes Materials ist.

11. Dichtungsanordnung nach Anspruch 10,
**dadurch gekennzeichnet,**
**dass** der Kernteil (8) aus einem Thermoplast, z.B. Polyprophylen (PP), und das übrige Material des Dichtungsstrangs ein Elastomer, insbesondere thermoplastisches Elastomer, betrifft.

## Claims

1. Sealing arrangement having a sealing element (1, 1'), which has at least one sealing portion (9, 10) for sealing a vertically movable window pane (3, 3') of a vehicle door in relation to a vertical window-frame limb (2, 2') of the vehicle door,
wherein the sealing element (1, 1') also has a sealing portion (11) for sealing a gap (6, 6'), wherein the gap (6, 6') is formed between a body pillar (4), which is adjacent to the vehicle door, and a vertical peripheral side of the window pane (3, 3'), said vertical peripheral side being directed toward the body pillar (4),
**characterized in that**
the sealing portion (11) for sealing the gap (6, 6') is of tubular design and butts both against the body pillar (4) and against the window pane (3, 3').

2. Sealing arrangement according to Claim 1,
**characterized in that**
the outer surface of the window pane (3, 3') is flush with an outer surface (5) of the body pillar (4).

3. Sealing arrangement according to Claim 1 or 2,
**characterized in that**
the tubular sealing portion (11) has a non-circular cross-sectional shape and butts against the body pillar (4) in particular by way of a tube-wall corner (17) .

4. Sealing arrangement according to one of Claims 1 to 3,
**characterized in that**
the tubular sealing portion (11) comprises two tube-wall portions (15, 16), which run towards one another at an acute angle to form the tube-wall corner (17).

5. Sealing arrangement according to Claim 4,
**characterized in that**
the tube-wall portions (15, 16) extend towards each other at a distance apart from a core part (8) of the sealing element (1, 1').

6. Sealing arrangement according to Claim 4 or 5,
**characterized in that**
at least one of the two tube-wall portions (15, 16) is curved in the direction of the window pane and butts against the window pane (3, 3') in particular by way of a curved tube-wall portion (15).

7. Sealing arrangement according to Claim 6,
**characterized in that**
the tube-wall portion (15) which butts against the window pane (3, 3') has weak points (22), which increase the flexibility of the tube-wall portion (15) .

8. Sealing arrangement according to Claim 6 or 7,
**characterized in that**
the tube-wall portion (15) which butts against the window pane (3, 3') has a sliding layer (23"), which extends preferably over, and around, the tube-wall corner (17).

9. Sealing arrangement according to one of Claims 1 to 8,
**characterized in that**
the tubular sealing portion (11) is designed in the form of a tube which is closed by a latching connection (18) between tube-wall ends.

10. Sealing arrangement according to one of Claims 5 to 9,
**characterized in that**
the core part (8) consists of a material which is firmer than material used to form sealing portions (9-11) of the sealing element (1, 1').

11. Sealing arrangement according to Claim 10,
**characterized in that**
the core part (8) concerns of a thermoplastic material, e.g. polypropylene (PP), and the rest of the material of the extruded sealing means concerns an elastomer, in particular a thermoplastic elastomer.

## Revendications

1. Dispositif d'étanchéité comportant un élément d'étanchéité (1, 1') qui présente au moins une portion d'étanchéité (9, 10) destinée à assurer l'étanchéité d'une vitre de fenêtre (3, 3'), mobile verticalement, d'une porte de véhicule contre une branche verticale (2, 2') du cadre de fenêtre de la porte de véhicule,
dans lequel
l'élément d'étanchéité (1, 1') comprend en outre une portion d'étanchéité (11) pour rendre étanche un intervalle (6, 6'), l'intervalle (6, 6') étant formé entre un montant de carrosserie (4) adjacent à la porte de véhicule et un côté de bord vertical de la vitre (3, 3') tourné vers le montant de carrosserie (4),
**caractérisé en ce que**
la portion d'étanchéité (11) destinée à étancher l'intervalle (6, 6') est réalisée en forme tubulaire et s'appuie aussi bien contre le montant de carrosserie (4) que contre la vitre (3, 3').

2. Dispositif d'étanchéité selon la revendication 1,
**caractérisé en ce que**
la surface extérieure de la vitre (3, 3') est en affleurement avec une surface extérieure (5) du montant de carrosserie (4).

3. Dispositif d'étanchéité selon la revendication 1 ou 2,
**caractérisé en ce que**
quant à sa forme en section transversale, la portion d'étanchéité tubulaire (11) s'écarte d'une forme circulaire et s'appuie contre le montant de carrosserie (4), en particulier par un coin de paroi tubulaire (17).

4. Dispositif d'étanchéité selon l'une des revendications 1 à 3,
**caractérisé en ce que**
la portion d'étanchéité tubulaire (11) comprend deux portions de paroi tubulaire (15, 16) convergeant selon un angle aigu l'une vers l'autre pour former le coin de paroi tubulaire (17).

5. Dispositif d'étanchéité selon la revendication 4,
**caractérisé en ce que**
les portions de paroi tubulaire (15, 16) s'étendent l'une vers l'autre à distance d'une partie de cœur (8) de l'élément d'étanchéité (1, 1').

6. Dispositif d'étanchéité selon la revendication 4 ou 5,
**caractérisé en ce que**
l'une au moins des deux portions de paroi tubulaire (15, 16) est bombée vers la vitre de la fenêtre et s'appuie en particulier contre la vitre (3, 3') par une portion de paroi tubulaire (15) bombée.

7. Dispositif d'étanchéité selon la revendication 6,
**caractérisé en ce que**
la portion de paroi tubulaire (15) qui s'appuie contre la vitre (3, 3') présente des emplacements faibles (22) qui augmentent la flexibilité de la portion de paroi tubulaire (15).

8. Dispositif d'étanchéité selon la revendication 6 ou 7,
**caractérisé en ce que**
la portion de paroi tubulaire (15) s'appuyant contre la vitre (3, 3') présente une couche de glissement (23") qui s'étend de préférence autour du coin de paroi tubulaire (17).

9. Dispositif d'étanchéité selon l'une des revendications 1 à 8,
**caractérisé en ce que**
la portion d'étanchéité tubulaire (11) est réalisée sous forme de tuyau flexible fermé par une liaison à enclenchement (18) entre les extrémités de la paroi tubulaire.

10. Dispositif d'étanchéité selon l'une des revendications 5 à 9,
**caractérisé en ce que**
la partie de cœur (8) est constituée d'un matériau qui est plus résistant que le matériau utilisé pour former les portions d'étanchéité (9 - 11) de l'élément d'étanchéité (1, 1').

11. Dispositif d'étanchéité selon la revendication 10,
**caractérisé en ce que**
la partie de cœur (8) est constituée d'un thermoplastique, par exemple du polypropylène (PP), et le matériau restant du boudin d'étanchéité concerne un élastomère, en particulier un élastomère thermoplastique.
